# EUROPEAN PATENT APPLICATION

(11) **EP 1 132 811 A2**
(43) Date of publication of application: **12.09.2001**
(21) Application number: 01105582.9
(22) Date of filing: 06.03.2001
(51) Int. Cl.: G06F 5/06

(54) **FIFO Type data input/output apparatus and FIFO type data input/output method**

(30) Priority: 07.03.2000 JP 2000061507
(71) Applicant: SONY CORPORATION, Tokyo (JP)
(72) Inventor: Kawashima, Hiroshi, Shinagawa-ku, Tokyo (JP)
(74) Representative: Melzer, Wolfgang, Dipl.-Ing.

(57) **Abstract**

There is provided an FIFO type data input/output apparatus that enables high-speed data extraction and realizes reduction in size. An instruction signal for data input/output process among adjacent entries including the data input/output direction is given to each entry of the memory circuit including a plurality of entries functioning as the data storage region in order to execute the data write and data read operations among the adjacent entries in the memory circuit. The control signals outputted from the control circuit include the load signal to instruct to latch the data from the data input line to own entry and the shift right signal to instruct to latch the data stored in the left adjacent entry to own entry and these control signals are outputted to each entry to provide an output of the selected data.

## Description

### BACKGROUND OF THE INVENTION

### Field of the Invention

The present invention relates to a first-in first-out (FIFO) type memory device and an FIFO type data input/output method and particularly to an FIFO type data input/output apparatus and an FIFO type input/output method to realize an FIFO system queue of high speed and small size circuit structure without use of a data multiplexer to select an output data.

### Description of the Related Art

The FIFO type data input/output apparatus and FIFO type data input/output method are used, for example, for data transfer between two communication circuits of different communication rates. A structure for sequentially accumulating the data from the input side to the FIFO type data input/output apparatus and extracting such accumulated data in the sequence of input in the delayed timing different from that in the input side may be realized by forming the FIFO type data input/output system between the communication circuits.

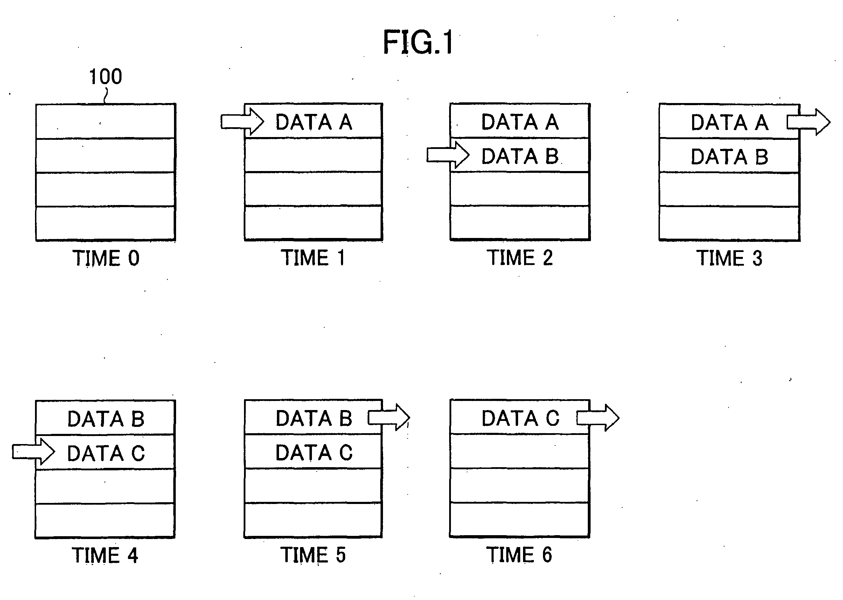

Operations of an ordinary FIFO type data input/output apparatus will be explained with reference to the accompanying drawings. Fig. 1 illustrates a time series data input/output and data storing situation of an FIFO type data input/output apparatus. Data is inputted and outputted sequentially during the period of time 0 to 6. The arrow mark in the left side of the FIFO type data input/output apparatus 100 of Fig. 1 indicates the data write process, while the arrow mark in the right side of the FIFO type data input/output apparatus indicates the data read process.

Time 0 indicates the initial condition where data is not stored within the FIFO type data input/output apparatus. At the time 1, the write process of data A is executed and at the time 2, the write process of data B is executed. Moreover, at the time 3, the data A is read, at the time 4, data C is written, at the time 6, the data B is read and at the time 6, the data C is read. As explained above, the data input/output method using the FIFO type data input/output apparatus maintains the data input sequence and data output sequence.

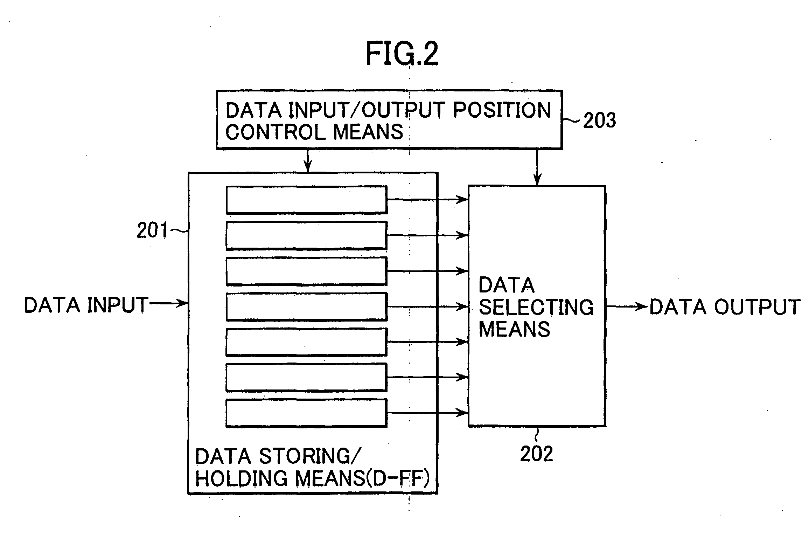

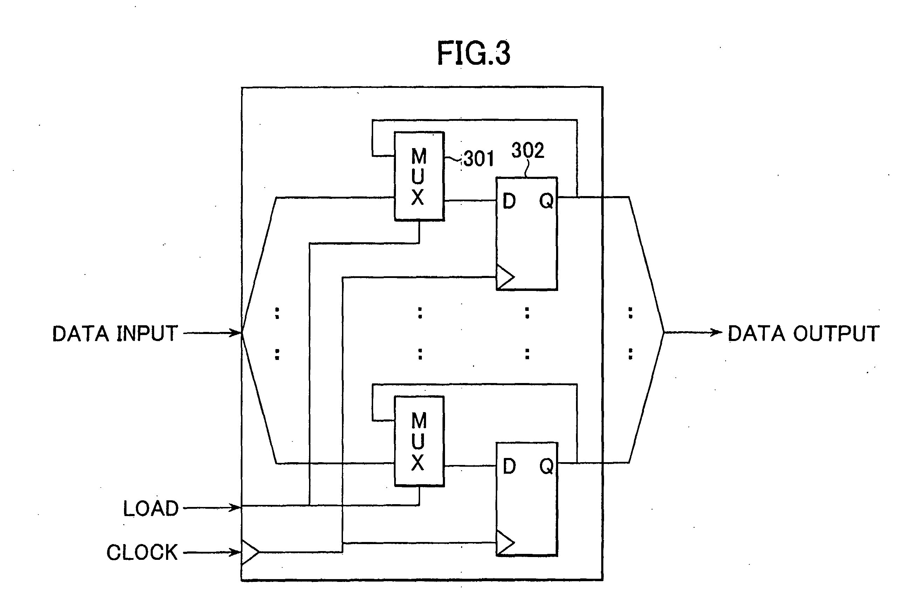

Fig. 2 illustrates a block diagram indicating an ordinary structure of the FIFO type data input/output apparatus of the related art. As illustrated in Fig. 2, the FIFO type data input/output apparatus includes, as the principal structural elements, a memory circuit 201 formed of flip-flop (D-FF) circuit for holding data contents, a data selecting means (selector circuit) 202 for selectively extracting data from the memory circuit 201 and a control circuit 203 for controlling the data storing position and data extracting position. The memory circuit 201 has a plurality of entries 201(1) to 201(n) for holding data. A practical circuit structure example of an entry forming the memory circuit 201 is illustrated in Fig. 3.

As illustrated in Fig. 3, one entry forming the memory circuit 201 is formed of a multiplexer 301 and a flip-flop circuit 302 and inputs a load signal for latching the data input to the entry and also inputs a clock timing for data output from the entry. The data input and data output timings for each entry are controlled with these load signal and clock signal.

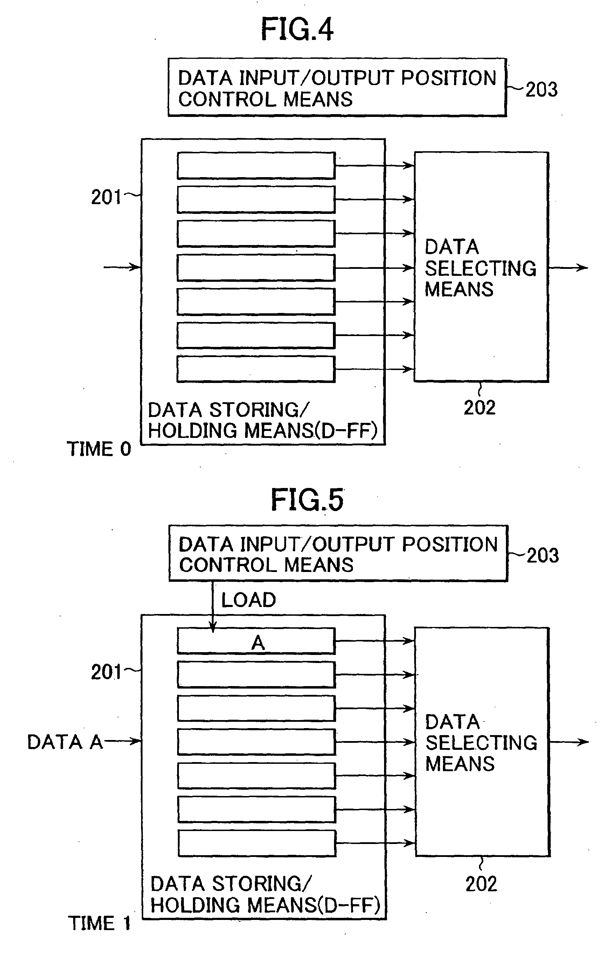

Next, the data input/output sequence for each entry in the memory circuit 201 forming the FIFO type data input/output apparatus having such structure will be explained with reference to Fig. 4 to Fig. 10.

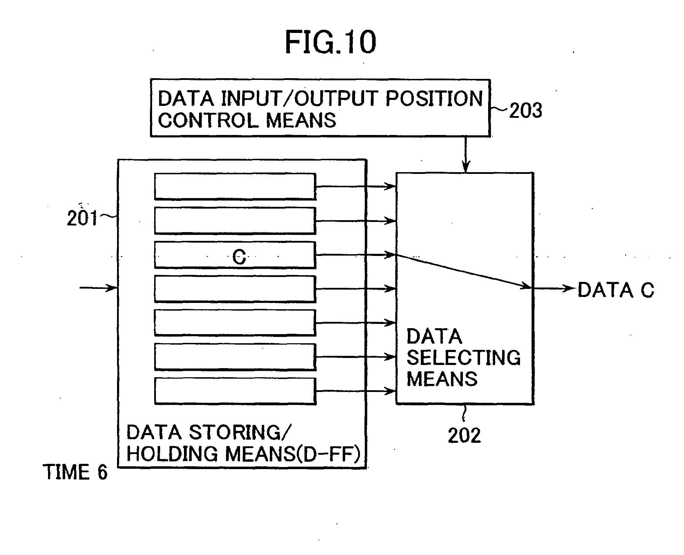

The sequence up to the time 6 illustrated in Fig. 10 will be explained sequentially under the condition that the condition of Fig. 4 is defined as time 0. The condition at the time 0 of Fig. 4 indicates the condition where data is not written in the entry within the memory circuit 201, namely the initial condition. A control signal is also not outputted from a control circuit 203.

At the time 1 illustrated in Fig. 5, the load signal is inputted to the memory circuit 201 from the control circuit 203 and thereby the data A is written into the first entry. At the time 2 illustrated in Fig. 6, the load signal is inputted to the second entry of the memory circuit 201 from the control circuit 203 and thereby the data A is written into the second entry. Next, at the time 3 illustrated in Fig. 7, a data selecting means (selector circuit) 202 outputs the data A stored in the first entry on the basis of the data output position signal from the control circuit 203.

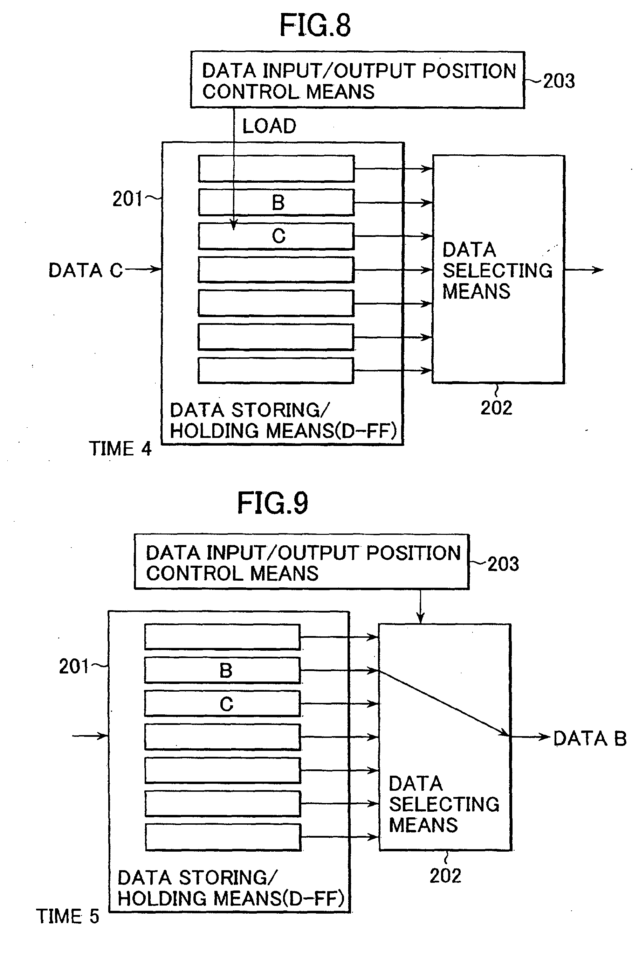

Next, at the time 4 illustrated in Fig. 8, the load signal is inputted to the third entry of the memory circuit 201 from the control circuit 203 and the data C is written into the third entry. Next, at the time 5 illustrated in Fig. 9, the data selecting means (selector circuit) 202 outputs the data B stored in the second entry based on the data output position signal from the control circuit 203. Moreover, finally, at the time 6 illustrated in Fig. 10, the data selecting means (selector circuit) 202 outputs the data C stored in the third entry based on the data output position signal from the control circuit 203.

In the circuit system of the FIFO type data input/output apparatus and the data input/output system of the related art, as a circuit formed to select the data of the particular word from multiple words, namely as a selector circuit, the structure combining in the multiple stage the 2-input/1-output (2-to-1) multiplexer is used in general. However, when the selector circuit is used in the multiple stage structure of the multiplexer, there rises a problem that delay of data output is generated because the data is essentially processed for the sequential propagation of multiplexer in the multiple stages. Moreover, there lies also a problem that a physical size of circuit increases because the multiplexer of the multiple stages is structured.

For example, the 2-input/1-output (2-to-1) multiplexer is required in the number B^{*} (W - 1) when the bit width of the FIFO type data input/output apparatus is set to B and the number of words thereof is set to W and thereby the data passes the number of stages expressed as log 2(W). In this case, when a delay time until the data is outputted at the Q output terminal of the D-type flip-flop circuit (D-FF) from the input of the clock signal instructing an output to the memory circuit 201 is defined as TpdFF and a propagation delay per stage of the 2-input/1-output (2-to-1) multiplexer as TpdMux, the time required for data to pass all stages of log 2(W), namely the total delay time is expressed as TpdFF + (TpdMux^{*}log 2(W)).

As the practical example, when the FIFO of 32 bits width/1024 words is structured, the total delay time is calculated in trial.

In this case, the number of required 2-input/1-output (2 - to - 1) multiplexers reaches B* (W - 1) = 32* (1024 - 1) = 32736, namely 32736 multiplexers are necessary.

Moreover, in this case, if propagation delay of a stage of the 2-input/1-output (2 - to - 1) multiplexer is considered as TpdMux = 1 [ns] by assuming that the delay time TpdFF = 1 [ns] until the data output at the Q output terminal of the flip-flop (D-FF) circuit from the clock signal, the total delay time Tpdtotal becomes TpdFF + (TpdMux)^{*}log2 (1024)) = 11 [ns].

As explained above, the FIFO type data input/output apparatus of the related art introducing the structure formed of the multiplexers of multiple stage has a problem that a delay time is generated in the data transmission via the multiplexer and a problem that physical size of circuit increases due to employment of the multiple stage multiplexer in which many multiplexers are required.

### SUMMARY OF THE INVENTION

The present invention has been proposed to solve the problems of the FIFO type data input/output apparatus of the related art and therefore an object of the present invention is to provide an FIFO type data input/output apparatus and an FIFO type data input/output method that reduce generation of delay time in the data transmission and realize reduction in size of the circuit.

According to the FIFO type data input/output method of the present invention, the structure does not require the data selecting means (selector circuit) using the multiplexers of the multiple stage- and therefore delay of data is no longer generated for propagation thereof in the multiplexer of the multiple stage, unlike the FIFO memory circuit of the related art, and thereby high speed data output can be realized and further reduction in the physical structure of the circuit can also be realized.

The present invention has been proposed to attain the object explained above, and according to one aspect of the present invention, there is provided an FIFO type data input/output apparatus comprising memory means including a plurality of entries functioning as data storage regions and a control means for selectively outputting a control signal to any one of the entries in order to store the data inputted via a data input line to the entries, wherein the control means has a structure to execute data input control for the entries of data via the data input line by outputting a load signal to the vacant entry nearest to the output terminal from a plurality of entries forming the memory means, data output control by outputting a data shift signal based on a clock signal to the output terminal forming the memory means and data shift control among the entries by outputting the data shift signal to the entry which enables data shift to the output terminal side among the adjacent entries.

According to an embodiment of the FIFO type data input/output apparatus of the present invention, the data shift signal outputted from the control means includes a signal indicating the input/output direction of data among adjacent entries forming the memory means.

According to an embodiment of the FIFO type data input/output apparatus of the present invention, the data shift signal outputted from the control means is a control signal for executing data transfer among adjacent entries in the data shift direction with the data output terminal side defined as the data shift direction.

According to an embodiment of the FIFO type data input/output apparatus of the present invention, each entry forming the memory means has a structure including a plurality of 4-input/1-output multiplexers and a plurality of flip-flop circuits.

Moreover, according to another aspect of the present invention, there is provided an FIFO type data input/output method in an FIFO type data input/output apparatus comprising memory means having a plurality of entries functions as data storing region and control means for selectively outputting a control signal to any one of the entries to store the data inputted via a data input line to the entries, comprising the steps of executing data input control for the entry of data via the data input line by outputting a load signal from the control means to a vacant entry nearest to the output terminal among a plurality of entries forming the memory means, data output control by outputting a data shift signal based on a clock signal to the entries of output terminal forming the memory means and data shift control among entries by outputting the data shift signal from the control means to the entry that enables data shift to the output terminal side among adjacent entries.

According to an embodiment of the FIFO type data input/output apparatus of the present invention, the data shift signal outputted from the control means includes a signal indicating the data input/output direction of adjacent entries forming the memory means.

According to an embodiment of the FIFO type data input/output apparatus of the present invention, the data shift signal outputted from the control means is a control signal to execute data transfer among adjacent entries in the data shift direction with the data output terminal side defined as the data shift direction.

The other objects, and features and advantages of the present invention will become apparent from the preferred embodiments of the present invention explained later and more detail explanation with reference to the accompanying drawings.

### BRIEF DESCRIPTION OF THE DRAWINGS

Fig. 1 is a diagram for explaining operation example in an ordinary FIFO type data input/output apparatus.

Fig. 2 is a block diagram illustrating a structure example of the FIFO type data input/output apparatus of the related art.

Fig. 3 is a diagram illustrating a circuit structure example of an entry forming the memory circuit of the FIFO type data input/output apparatus of the related art.

Fig. 4 is a diagram (time 0) for explaining the time series data input/output process of the FIFO type data input/output apparatus of the related art.

Fig. 5 is a diagram (time 1) for explaining the times series data input/output process of the FIFO type data input/output apparatus of the related art.

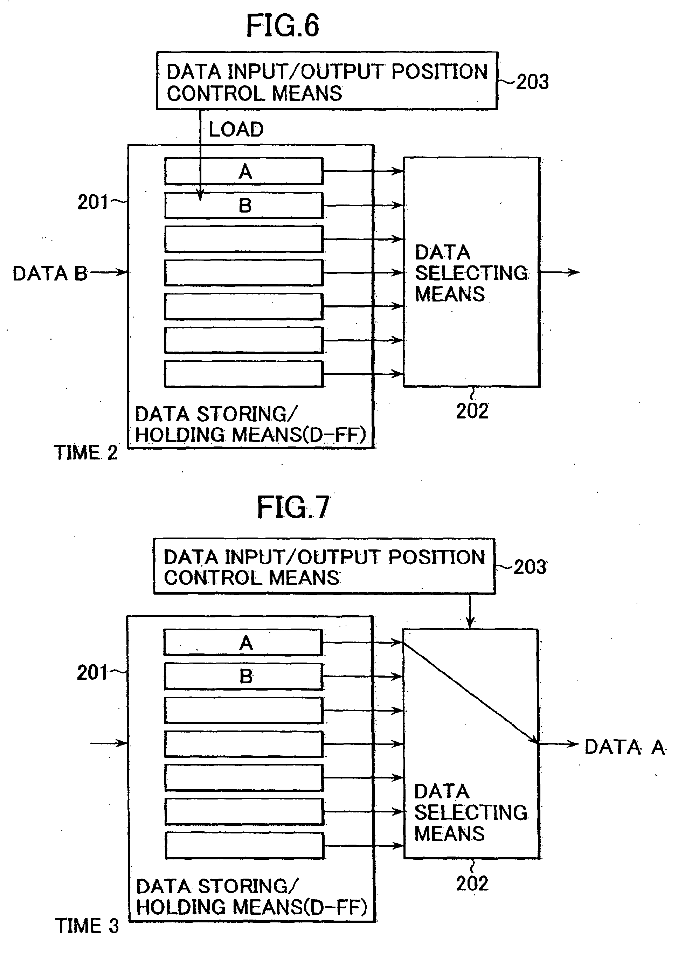

Fig. 6 is a diagram (time 2) for explaining the time series data input/output process of the FIFO type data input/output apparatus of the related art.

Fig. 7 is a diagram (time 3) for explaining the time series data input/output process of the FIFO type data input/output apparatus of the related art.

Fig. 8 is a diagram (time 4) for explaining the time series data input/output process of the FIFO type data input/output apparatus of the related art.

Fig. 9 is a diagram (time 5) for explaining the time series data input/output process of the FIFO type data input/output apparatus of the related art.

Fig. 10 is a diagram (time 6) for explaining the time series data input/output process of the FIFO type data input/output apparatus of the related art.

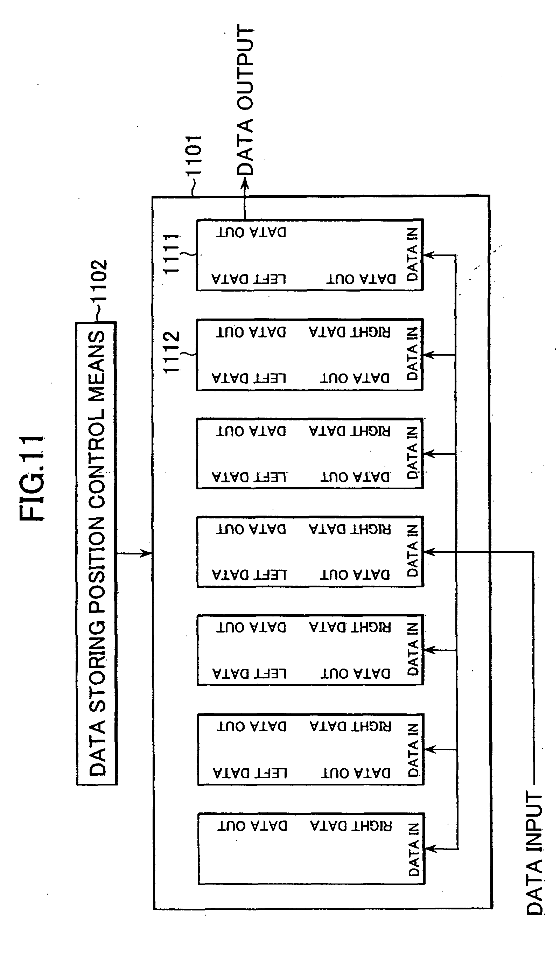

Fig. 11 is.a block diagram illustrating a structure example of the FIFO type data input/output apparatus of the present invention.

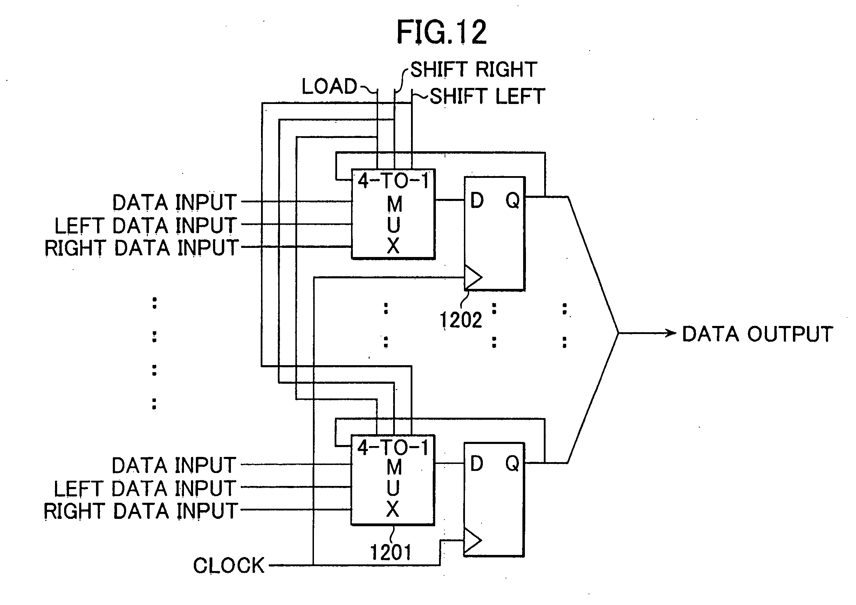

Fig. 12 is a diagram illustrating a circuit structure example of the entry forming the memory circuit of the FIFO type data input/output apparatus of the present invention.

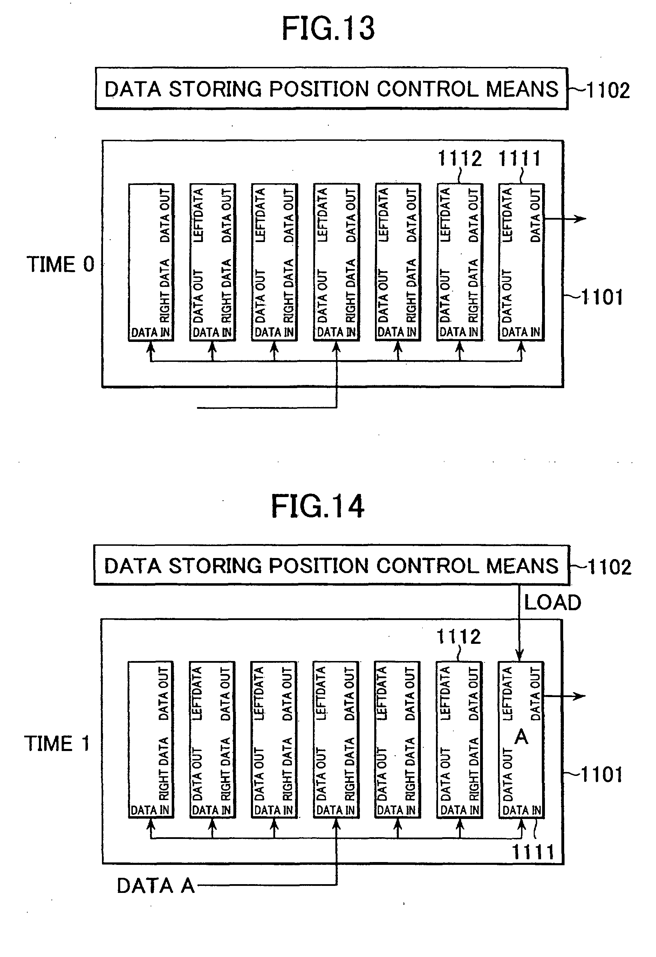

Fig. 13 is a diagram (time 0) for explaining the times series data input/output process of the FIFO type data input/output apparatus of the present invention.

Fig. 14 is a diagram (time 1) for explaining the times series data input/output process of the FIFO type data input/output apparatus of the present invention.

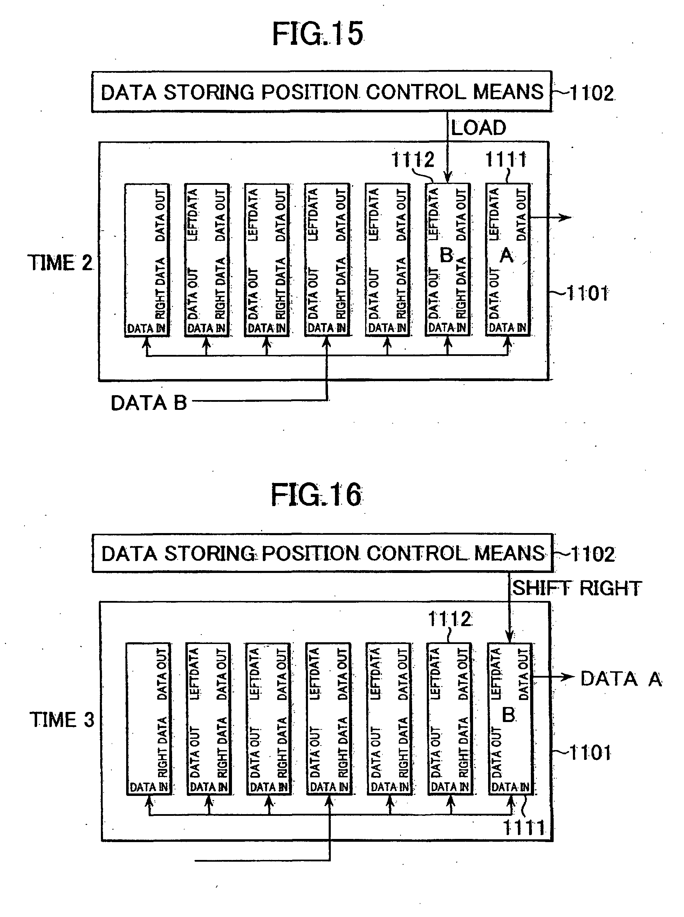

Fig. 15 is a diagram (time 2) for explaining the times series data input/output process of the FIFO type data input/output apparatus of the present invention.

Fig. 16 is a diagram (time 3) for explaining the times series data input/output process of the FIFO type data input/output apparatus of the present invention.

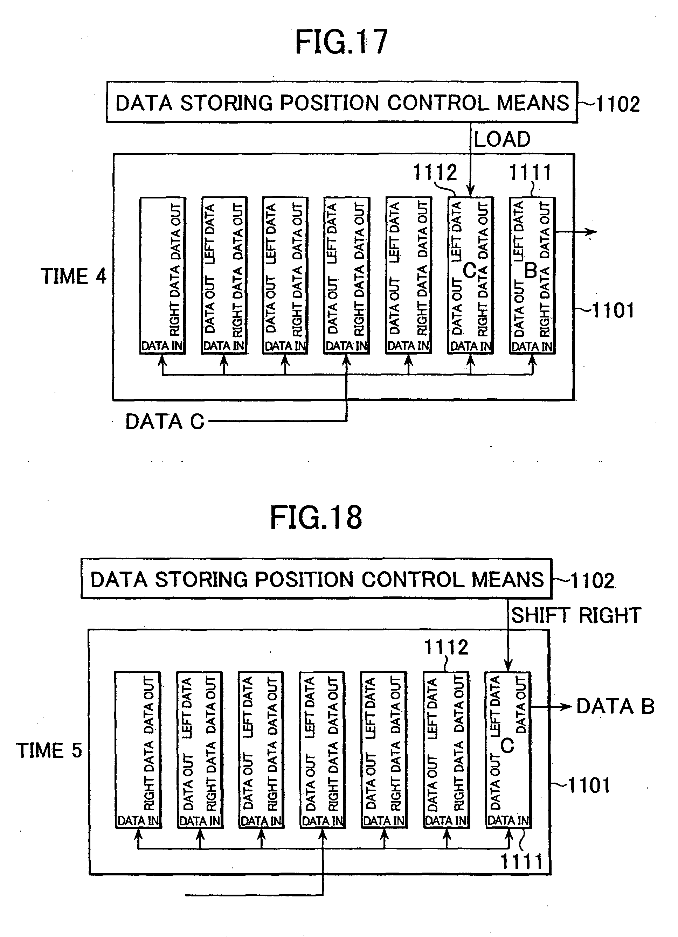

Fig. 17 is a diagram (time 4) for explaining the times series data input/output process of the FIFO type data input/output apparatus of the present invention.

Fig. 18 is a diagram (time 5) for explaining the times series data input/output process of the FIFO type data input/output apparatus of the present invention.

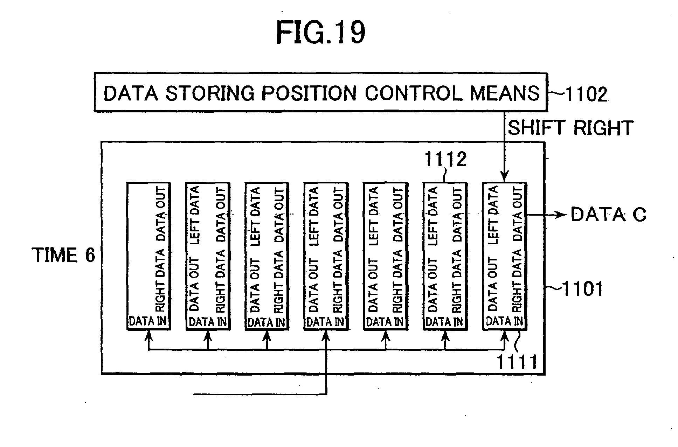

Fig. 19 is a diagram (time 6) for explaining the times series data input/output process of the FIFO type data input/output apparatus of the present invention.

### DESCRIPTION OF THE PREFERRED EMBODIMENTS

The preferred embodiments of the present invention will be explained in detail with reference to the accompanying drawings.

An example of structure of the FIFO type data input/output apparatus of the present invention is illustrated in Fig. 11. The FIFO type data input/output apparatus of the present invention includes, as the principal structural elements a memory circuit 1101 formed of flip-flop circuit (D-FF) as the memory circuit to hold the data contents and a control circuit 1102 for outputting a data storing position control signal to the memory circuit 1101. The memory circuit 1101 includes a plurality of entries 1111, 1112, ... for holding data.

Each entry 1111, 1112, ... forming the memory circuit 1101 of Fig. 11 respectively has a structure that enables data input and output for the left adjacent entry and that for the right adjacent entry.

The control circuit 1102 in the FIFO type data input/output apparatus of the present invention executes the data output control by outputting the load signal to the vacant entry nearest to the output terminal of a plurality of entries forming the memory circuit 1101, storing the data via the input line and outputting the data shift signal based on the clock signal to the entry of the output terminal forming the memory circuit 1101, namely to the entry 1111 in Fig. 11 and also executes the control by outputting the data shift signal (shift write signal) to the entry that enables data shift to sequentially store the data from the entry nearer to the output terminal in a plurality of entries forming the memory circuit 1101. With this control, data shift is sequentially executed among the entries to realize the FIFO type data input and output.

As will be understood from Fig. 11, the data selecting means (selector circuit) used in the FIFO type data input/output apparatus of the related art is not provided in the FIFO type data input/output apparatus of the present invention. Therefore, the physical size of circuit can be reduced and since the data selection and transfer process in the data selecting means (selector circuit) are no longer required, high speed data read operation is enabled.

Fig. 12 illustrates a detail structure of an entry, for example, the entry 1111 or entry 1112 of the memory circuit 1101 forming the FIFO type data input/output apparatus of the present invention. As illustrated in Fig. 12, an entry of the memory circuit 1101 is provided with a plurality of 4 - input/1 - output (4-to-1) multiplexers 1201 and flip-flop circuits (D-FF) 1202 to form a structure to input, as the control signals, to each 4 - input/1 - output (4-to-1) multiplexer, (1) the load signal as the instruction signal to latch the data input to the entry, (2) the shift right signal to instruct to latch the output of left entry (left data input) to the entry as the input data and (3) the shift left signal to instruct to latch the output of the right entry (right data input) to the entry as the input data. These control signals are inputted to each 4-input/1-output (4-to-1) multiplexer from the control circuit 1102 illustrated in Fig. 11.

In the FIFIO type data input/output apparatus of this embodiment, the extremely right end entry 1111 of the memory circuit 1102 is formed as the output end terminal. In this case, the shift left signal (3) to instruct to latch the output of the right side entry (right data input) to the entry as the input data is not always essential and the control signal outputted from the control circuit 1102 may be formed only of the shift right signal to instruct to latch, to the entry, the input data of (1) the load signal as the instruction signal to latch the data input to the entry and (2) the output of the left entry (left data input).

Each entry 1111, 1112, ... forming the memory circuit 1101 of Fig. 11 illustrates an example of structure that enables data outputs to the adjacent left entry and the right adjacent entry, but in the case of above structure, it is also possible to delete the structure for data output to the left adjacent entry and data input from the adjacent right entry. Namely, each entry may be structured to enable only the data input from the data input line, data output to the right adjacent entry and data input from the left adjacent entry.

The time series sequence in the data input/output process of the FIFO type data input/output apparatus of the present invention will be explained with reference to Fig. 13 to Fig. 19.

Fig. 13 to Fig. 19 illustrate the data input/output condition, data storing condition in the memory circuit 1101 in the FIFO type data input/output apparatus of the present invention of the clock timings 0 to 6 and the control signal outputted from the control circuit 1102.

First, Fig. 13 illustrates the condition of the memory circuit 1101 at the time 0, namely the initial condition thereof. In this condition, the data is not yet stored and there is no output of control signal from the control circuit 1102.

Fig. 14 illustrates the condition at the time 1. In this condition, the load signal is inputted to the right end entry 1111 of the memory circuit 1101 from the control circuit 1102 and the data A is stored as the input data in the entry 1111.

Fig. 15 illustrates the condition at the time 2. In this condition, the load signal is inputted to the entry 1112 of the memory circuit 1101 from the control circuit 1102 and the data B is stored as the input data in the entry 1112.

Fig. 16 illustrates the condition at the time 3. In this condition, the shift right signal is inputted to the entry 1111 of the memory circuit 1101 from the control circuit 1102, the data A stored in t he entry 1111 is read and the data B stored in the left side entry 1112 is shifted to the entry 1111 and is then stored in the entry 1111.

Fig. 17 illustrates the condition at the time 4. In this condition, the load signal is inputted to the entry 1112 of the memory circuit 1101 from the control circuit 1102 and the data C is stored as the input data in the entry 1112.

Fig. 18 illustrates the condition at the time 5. In this condition, the shift right signal is inputted to the entry 1111 of the memory circuit 1101 from the control circuit 1102 and the data B stored in the entry 1111 is read and the data C stored in the left side entry 1112 is shifted to the entry 1111 and is then stored in the entry 1111.

Next, Fig. 19 illustrates the condition at the time 6. In this condition, the shift right signal is inputted to the entry 1111 of the memory circuit 1101 from the control circuit 1102 and the data C stored in the entry 1111 is read and the data D stored in the left side entry 1112 is shifted to the entry 1111 and is then stored in the entry 1111.

The control circuit 1102 in the FIFO type data input/output apparatus of the present invention executes the control to output the data shift signal to the entry that enables data shift in order to store the data via the input line by outputting the load signal to the vacant entry nearest to the output end among a plurality of entries forming the memory circuit 1101 and sequentially store the data from the entry near to the output end among a plurality of entries forming the memory circuit 1101. With this control, the data shift is sequentially executed among the entries to execute the FIFO type data input and output.

As will be apparent from above explanation, the FIFO type data input/output apparatus of the present invention does not require the data selector circuit to extract the data, unlike the FIFO type data input/output apparatus of the related art. Therefore, the multiplexer structure of multiple stages forming the data selecting means (selector circuit) of the FIFO type data input/output apparatus of the related art is not eliminated to simplify the circuit structure. Moreover, a delay time required to extract data output is determined with a delay in the circuit up to the Q terminal output from the clock of the D type flip-flop (D-FF) circuit, not depending on the number of words of the memory circuit. Thereby, delay of output can be reduced remarkably.

In the FIFO type data input/output apparatus of the present invention, when delay up to the Q terminal output from the clock of the flip-flop (D-FF) circuit is defined as TpdFF, the delay time Tpdtotal becomes equal to TpdFF. This delay becomes constant, not depending on the word of the memory circuit.

The present invention has been explained in detail with reference to the particular embodiments. However, it is apparent that the present invention allows those who are skilled in this art to make various modifications and changes without departing from the scope of the present invention. Namely, the present invention has been disclosed with reference to the preferred embodiments and shall not be interpreted with limitation thereto. The present invention will be well understood only from the claims of the present invention.

## Claims

1. An FIFO type data input/output apparatus, comprising:
memory means including a plurality of entries functioning as data storage regions; and
control means for selectively outputting a control signal to any one of said entries in order to store the data inputted via a data input line to said entries,
said control means having a structure to execute:
data input control for said entries of data via said data input line by outputting a load signal to the vacant entry nearest to the output terminal from a plurality of entries forming said memory means;
data output control by outputting a data shift signal based on a clock signal to the output terminal forming said memory means, and
data shift control among the entries by outputting the data shift signal to the entry which enables data shift to the output terminal side among the adjacent entries.

2. An FIFO type data input/output apparatus as claimed in claim 1, wherein the data shift signal outputted from said control means includes a signal indicating the input/output direction of data among adjacent entries forming said memory means.

3. An FIFO type data input/output apparatus as claimed in claim 1, wherein the data shift signal outputted from said control means is a control signal for executing data transfer among adjacent entries in said data shift direction with the data output terminal side defined as the data shift direction.

4. An FIFO type data input/output apparatus as claimed in claim 1, wherein each entry forming said memory means has a structure including a plurality of 4-input/1-output multiplexers and a plurality of flip-flop circuits.

5. An FIFO type data input/output method in an FIFO type data input/output apparatus which comprises memory means having a plurality of entries functions as data storing region and control means for selectively outputting a control signal to any one of said entries to store the data inputted via a data input line to said entries, comprising the steps of executing:
data input control for said entry of data via said data input line by outputting a load signal from said control means to a vacant entry nearest to the output terminal among a plurality of entries forming said memory means;
data output control by outputting a data shift signal based on a clock signal to the entries of output terminal forming said memory means; and
data shift control among entries by outputting the data shift signal from said control means to the entry that enables data shift to the output terminal side among adjacent entries.

6. An FIFO type data input/output method as claimed in claim 5, wherein said data shift signal outputted from the control means includes a signal indicating the data input/output direction of adjacent entries forming said memory means.

7. An FIFO type data input/output method as claimed in claim 5, wherein said data shift signal -outputted from the control means is a control signal to execute data transfer among adjacent entries in said data shift direction with the data output terminal side defined as the data shift direction.
